(19) Europäisches Patentamt
European Patent Office
Office européen des brevets

(11) Veröffentlichungsnummer : **0 101 973**
**B1**

(12) # EUROPÄISCHE PATENTSCHRIFT

(45) Veröffentlichungstag der Patentschrift : **16.04.86**

(51) Int. Cl.[4] : **C 07 F 9/24**, C 07 F 9/65, A 01 N 57/26

(21) Anmeldenummer : **83107678.1**

(22) Anmeldetag : **04.08.83**

(54) **4-Trifluormethylphenyl(thio)phosphorsäureamide, Verfahren zu ihrer Herstellung und ihre Verwendung zur Bekämpfung von Schädlingen.**

(30) Priorität : **21.08.82 DE 3231191**

(43) Veröffentlichungstag der Anmeldung : **07.03.84 Patentblatt 84/10**

(45) Bekanntmachung des Hinweises auf die Patenterteilung : **16.04.86 Patentblatt 86/16**

(84) Benannte Vertragsstaaten : **AT BE CH DE FR GB IT LI NL SE**

(56) Entgegenhaltungen :
**EP-A- 0 049 383**
**FR-A- 2 210 614**
**US-A- 3 368 003**
**CHEMICAL ABSTRACTS, Band 87, 1977, page 218, no. 97398t, Columbus, Ohio, USA**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Buerstinghaus, Rainer, Dr.**
**Weinbergstrasse 85**
**D-6940 Weinheim (DE)**
Erfinder : **Varwig, Juergen, Dr.**
**Am Goetzenberg 1**
**D-6900 Heidelberg (DE)**
Erfinder : **Kiehs, Karl, Dr.**
**Sudetenstrasse 22**
**D-6840 Lampertheim (DE)**
Erfinder : **Adolphi, Heinrich, Dr.**
**Kalmitweg 11**
**D-6703 Limburgerhof (DE)**

**EP 0 101 973 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft 4-Trifluormethylphenyl-(thio)phosphorsäureamide, Verfahren zu ihrer Herstellung, Schädlingsbekämpfungsmittel, die diese Phosphorsäureamide als Wirkstoffe enthalten sowie ein Verfahren zur Bekämpfung von Schädlingen mit diesen Wirkstoffen.

Bestimmte trifluormethylphenyl-substituierte Phosphorsäureamide sind aus der US-Patentschrift 3 368 003 bekannt. Sie eignen sich zur Bekämpfung von Insekten. Ihre Wirkung ist jedoch speziell bei geringer Konzentration nicht immer ganz zufriedenstellend.

Es ist aus der JP-A-76 144 729, zitiert nach C.A. *87,* 97 398 t, auch bekannt, daß Thiophosphorsäureamide der Struktur

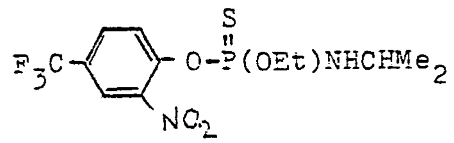

bzw. deren Analoge herbizid und insektizid wirken, wobei sich aus den Umständen der Beschreibung ergibt, daß vornehmlich die herbizide Wirkung gegenüber Monocotyledonen in Betracht gezogen wird. Diese Phosphorsäureamide sind — gerade wegen ihrer herbiziden Nebenwirkungen — als Insektizide praktisch ungeeignet. Es besteht daher weiterhin ein Bedürfnis, als Schädlingsbekämpfungsmittel wirksame Thiophosphorsäureamide zu schaffen.

Es wurde gefunden, daß 4-Trifluormethylphenyl(thio)phosphorsäureamide (I)

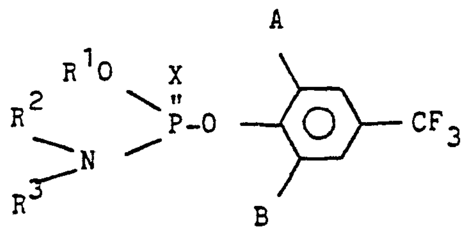

(I)

in der

$R^1$ eine unverzweigte oder verzweigte Alkylgruppe mit bis zu 4 Kohlenstoffatomen,

$R^2$, $R^3$ gleich oder verschieden sind und ein Wasserstoffatom oder eine unverzweigte oder verzweigte Alkylgruppe mit bis zu 4 Kohlenstoffatomen, eine olefinisch ungesättigte Alkylengruppe mit 2 bis 4 Kohlenstoffatomen oder gemeinsam einen zweiwertigen Alkylenrest mit 4 oder 5 Kohlenstoffatomen,

A, B gleich oder verschieden sind und ein Wasserstoff-, Chlor- oder Bromatom sowie

X ein Sauerstoff- oder Schwefelatom bedeuten, insektizid, akarizid und nematizid, bereits gut wirksamen bekannten ähnlichen Wirkstoffen überlegen sind.

Die 4-Trifluormethylphenyl(thio)phosphorsäureamid-derivate der Formel I können durch Umsetzung entsprechender Phenole mit entsprechenden (Thio)-Phosphorsäureesteramid-halogeniden erhalten werden :

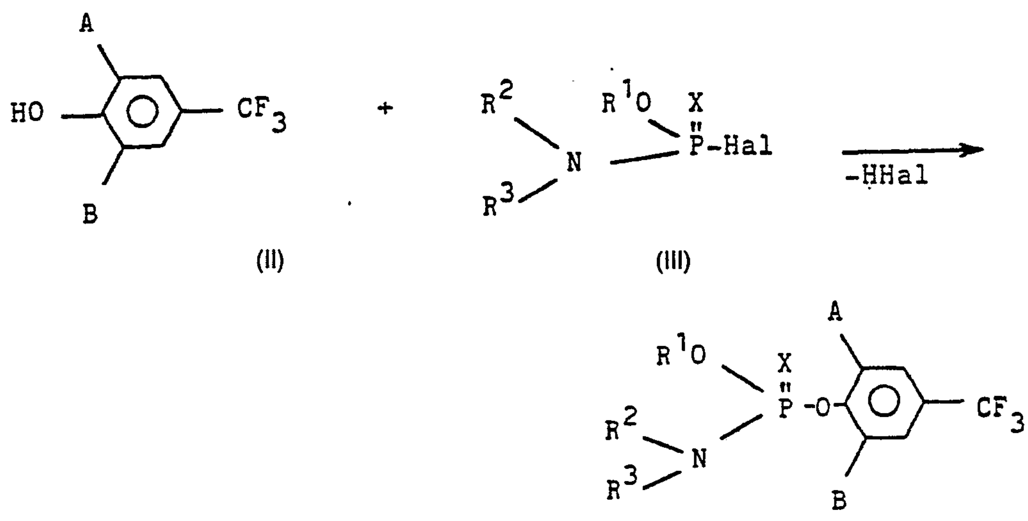


(II) (III)

(I)

Hal(ogen) bedeutet aus wirtschaftlichen Gründen vorzugsweise ein Chloratom.

Die Umsetzung wird zweckmäßigerweise in einem Lösungs- oder Verdünnungsmittel ausgeführt. Hierzu sind beispielsweise geeignet : aliphatische und aromatische, gegebenenfalls chlorierte Kohlenwasserstoffe, wie Petrolether, Benzol, Toluol, Xylol, Benzin, Dichlormethan, Chloroform, Tetrachlormethan, 1,2-Dichlorethan, Chlorbenzol, Ether wie Diethyl- und Di-n-butylether, Methyl-tert.-butylether, Tetrahydrofuran, Dioxan ; Ketone, beispielsweise Aceton, Methylethylketon, Methylisopropylketon ; Nitrile, wie Acetonitril und Propionitril, ferner typische aprotischdipolare Stoffe wie Dimethylformamid und Dimethylsulfoxid. Auch Gemische dieser Stoffe können als Lösungs- oder Verdünnungsmittel verwendet werden.

Als Säurebindemittel (Säureacceptor) eignen sich die bei der Phosphorylierung von Hydroxyverbindungen üblichen basischen Mittel. Besonders geeignet sind Alkalimetallcarbonate oder -alkoholate, wie Natrium- und Kaliumcarbonat, -methylat und -ethylat, ferner aliphatische, aromatische und heterocyclische Amine, z. B. Triethylamin, Dimethylamin, Piperidin, Dimethylanilin, Dimethylbenzylamin und Pyridin. In einigen Fällen ist die Verwendung von Alkyllithiumverbindungen, z. B. n-Butyllithium oder Alkalimetallhydriden, z. B. Natriumhydrid vorteilhaft.

Anstelle des Zusatzes eines Säureacceptors kann man auch vor der Umsetzung die Salze der Phenole, etwa die Alkalimetall-, Erdalkalimetall- oder Ammoniumsalze herstellen und diese umsetzen.

Üblicherweise setzt man die Ausgangsstoffe in stöchiometrischem Verhältnis ein. Ein Überschuß des einen oder anderen kann in Einzelfällen aber durchaus vorteilhaft sein.

Die Umsetzung verläuft gewöhnlich oberhalb von Raumtemperatur mit ausreichender Geschwindigkeit. 120 °C müssen i. a. nicht überschritten werden. Da sie in einigen Fällen unter Wärmeentwicklung verläuft, kann es von Vorteil sein, eine Kühlmöglichkeit vorzusehen.

Das Reaktionsgemisch wird in üblicher Weise aufgearbeitet, z. B. durch Versetzen mit Wasser, Trennen der Phase und Destillation und/oder Säulenchromatographie.

(Thio)Phosphorsäureesteramid-halogenide der Formel III und ihre Herstellung sind bekannt (Houben-Weyl, Methoden der organischen Chemie, 4. Auflage, Band XII/2, S. 405 ff., S. 755 ff., 1964). Die 4-Trifluormethylphenole der Formel II sind ebenfalls schon für andere Zwecke hergestellt worden (DE-OS 1 257 784 ; J. Am. Chem. Soc. *69,* 2 346 (1947)).

Die erfindungsgemäßen 4-Trifluormethylphenyl(thio)phosphorsäureamide (I) erhält man auch, wenn man zunächst ein Phosphorsäurephenolesterhalogenid IV

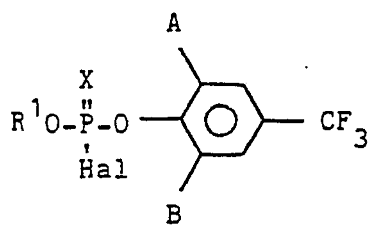

(IV)

herstellt und dieses mit einem entsprechenden sekundären Amin (in mindestens 2-facher molarer Menge) umsetzt.

Es empfiehlt sich bei der Herstellung von (IV) das Phenol (II) mit einem z. B. 25 %igen Überschuß des benötigten O-Alkyl(thio)phosphoresterdihalogenids zusammenzubringen. Diese Umsetzung verläuft relativ heftig ; sie findet schon zwischen — 70 und + 20 °C, vorzugsweise zwischen — 40 °C und 0 °C statt. Man verwendet zweckmäßig eines der o. g. Lösungs- und Verdünnungsmittel und ein Säurebindemittel, vorteilhaft ein tertiäres Amin, wie Triethylamin, Trimethylamin, N,N-Dimethyl-N-ethylamin, Pyridin oder Picolin.

Die Verbindungen (IV) lassen sich auch ohne Zusatz eines Säureacceptors gut herstellen, wenn man die Phenole (II) in Form ihrer Alkalimetallsalze einsetzt.

Zur Herstellung der erfindungsgemäßen 4-Trifluormethylphenyl(thio)phosphoresteramide (I) nach dem zuletzt beschriebenen Verfahren setzt man die O-Alkyl-O-phenyl(thio)-phosphorsäurediesterhalogenide IV mit wenigstens 2 Äquivalenten des Amins bei einer Temperatur von i. a. unter 120, vorzugsweise 20 bis 60 °C um. Die Amine VI können in reiner Form oder als wäßrige Lösung verwendet werden ; eines der vorgenannten Lösungs- oder Verdünnungsmittel kann man zusätzlich verwenden. Die erfindungsgemäßen Stoffe fallen meist in Form farbloser oder schwach bräunlich gefärbter Öle an, die sich durch längeres Erwärmen auf mäßig erhöhte Temperatur (« Andestillieren ») von den letzten flüchtigen Anteilen befreien und auf diese Weise reinigen lassen. Wenn kristalline Verbindungen erhalten werden, so kann man diese i. a. umkristallisieren.

Zur Charakterisierung der beispielhaft hergestellten Verbindungen (I) ist entweder der Schmelzpunkt oder das IR-Spektrum mit typischen Absorptionsmaxima aus den sog. « fingerprint »-Bereich zwischen 1 500 $cm^{-1}$ und 900 $cm^{-1}$ angegeben.

Beispiel 1

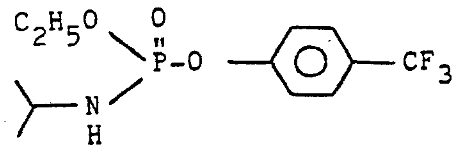

8,10 g 4-Trifluormethylphenol und 9,23 g O-Ethyl-N-isopropylphosphoresteramidchlorid werden in 50 ml Acetonitril vorgelegt und unter intensivem Rühren binnen 20 Minuten mit 6,90 g fein gepulvertem Kaliumcarbonat versetzt. Die Mischung wird 8 Stunden bei 40 °C gerührt, dann von unlöslichen Bestandteilen befreit und unter vermindertem Druck eingeengt. Der Rückstand wird in Ether aufgenommen, je dreimal mit 5 %iger Natronlauge und Wasser gewaschen, über Natriumsulfat getrocknet und vom Lösungsmittel befreit. Nach dem Abdestillieren bei 0,01 mbar und 50 °C verbleiben 9,70 g O-Ethyl-O-(4-trifluormethyl-phenyl)-isopropylphosphoramidat in Form eines klaren, gelblichen Öles.

Ausbeute : 65 % der rechnerisch möglichen.

Analyse : ($C_{12}H_{17}F_3NO_3P$ — M.G. 311) ;

Ber. : C 46,3 H 5,5 N 4,5

Gef. : C 46,5 H 5,6 N 4,5

Infrarotabsorption ($cm^{-1}$) : 1325, 1240, 1165, 1124, 1065, 1043, 924.

Beispiel 2

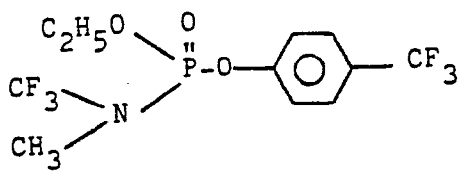

Man setzt wie vorstehend beschrieben 8,10 g 4-Trifluormethylphenol mit 8,57 g O-Ethyl-N,N-dimethylphosphoresteramidchlorid um und gewinnt 15,7 g O-Ethyl-O-(4-trifluormethyl-phenyl)-dimethylphosphoramidat als farbloses Öl in einer Ausbeute von 77 % der Berechneten.

Analyse ($C_{11}H_{15}F_3NO_3O$ — M.G. 297) ;

Ber. : C 44,5 H 5,1 N 4,7

Gef. : C 44,9 H 5,3 N 4,6

Infrarotabsorption ($cm^{-1}$) : 1323, 1165, 1125, 1066, 1002, 920.

Beispiel 3

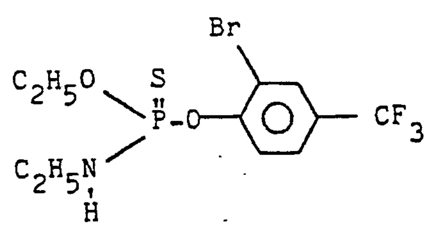

61,8 g O-Ethylthiophosphoresterdichlorid werden in 175 ml Tetrahydrofuran gelöst und bei einer Temperatur von — 40 °C tropfenweise mit einer Lösung von 66,5 g 2-Brom-4-trifluormethylphenol und 28,5 g Triethylamin in 150 ml Tetrahydrofuran versetzt. Man läßt 4 Stunden bei — 40 °C und 8 Stunden bei 20 °C nachrühren. Das ausgefallene Hydrochlorid wird abgesaugt und das Filtrat unter vermindertem Druck eingeengt. Der Rückstand wird in Ether aufgenommen, mit Wasser gewaschen, über Natriumsulfat getrocknet und vom Lösungsmittel befreit. Die erhaltene Flüssigkeit läßt sich bei 0,05 mbar und 112 bis 114 °C destillieren, wobei 61,5 g O-Ethyl-O-(2-brom-4-trifluormethylphenyl)thiophosphordiesterchlorid (58 % der berechneten Menge) erhalten werden.

Eine Lösung von 13,4 g des Phosphordiesterchlorids in 100 ml Toluol werden bei 10 °C tropfenweise mit einer Lösung von 3,15 g Ethylamin in 50 ml Toluol versetzt. Man rührt 12 Stunden bei Raumtemperatur, filtriert und engt das Filtrat ein. Der Rückstand läßt sich in Ether aufnehmen, je dreimal mit 5 %iger Natronlauge und Wasser waschen und über Natriumsulfat trocknen. Nach dem Entfernen des Lösungsmittels — zuletzt bei 0,02 mbar und 60 °C — verbleiben 12,2 g (89 % der berechneten Menge) O-Ethyl-O-(2-brom-4-trifluormethyl-phenyl)-ethylthiophosphoramidat als viskoses Öl.

Analyse :
Ber. : C 33,7 H 3,6 N 3,6
Gef. : C 34,1 H 3,8 N 3,5
Infrarotabsorption ($cm^{-1}$) : 1325, 1180, 1078, 1034.

Beispiel 4

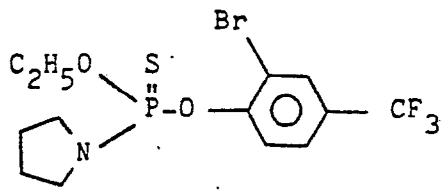

Zu 11,50 g des nach Beispiel 3 erhaltenen O-Ethyl-O-(2-brom-4-trifluormethylphenyl)thiophosphor diesterchlorids in 75 ml Toluol gibt man tropfenweise eine Lösung von 4,26 g Pyrrolidin in 25 ml Toluol. Nach dem die Wärmeentwicklung aufgehört hat, rührt man noch 24 Stunden bei Raumtemperatur, filtriert und engt das Filtrat ein. Der Rückstand wird wie beschrieben gereinigt, jeweils dreimal mit 5 %iger Natronlauge und Wasser gewaschen und über Natriumsulfat getrocknet. Es verbleiben 12,1 g (96 %) O-Ethyl-O-(2-brom-4-trifluormethylphenyl)-1-pyrrolidino-thiophosphoramidat.

Analyse ($C_{13}H_{16}BrF_3NO_2PS$ — M.G. 418) :
Ber. : C 37,3 H 3,9 N 3,4
Gef. : C 37,2 H 3,9 N 3,6

Die nachstehend in der Tabelle 1 aufgeführten Verbindungen wurden auf jeweils einem der in den Beispielen 1 bis 4 angegebenen Wege erhalten ; andere Verbindungen, die der Formel (I) entsprechen, können auf die gleiche Weise unter entsprechender Abwandlung der Vorschriften nach der jeweils benötigten Menge und — wegen der besten Reaktionsbedingungen — ggf. nach einem Vorversuch erhalten werden.

(Siehe Tabelle 1 Seite 6 ff.)

Tabelle 1

| Beispiel Nr. | $R^1$ | $R^2$ | $R^3$ | X | A | B | Schmelzpunkt oder IR-Absorption ($cm^{-1}$) |
|---|---|---|---|---|---|---|---|
| 5 | $C_2H_5$ | $CH(CH_3)_2$ | H | S | H | H | 1324, 1166, 1130, 1066, 1040, 912 |
| 6 | $C_2H_5$ | H | H | S | H | H | 39,5 bis 41,0°C |
| 7 | $C_2H_5$ | $CH(CH_3)_2$ | H | S | Cl | H | 1322, 1130, 1034 |
| 8 | $C_2H_5$ | $CH_3$ | $CH_3$ | S | H | H | 1320, 1165, 1122, 1066, 993, 907 |
| 9 | $C_2H_5$ | $CH(CH_3)_2$ | H | O | H | Cl | 1325, 1130, 1040, 925 |
| 10 | $C_2H_5$ | $CH(CH_3)_2$ | H | O | H | Br | 1320, 1130, 1040, 912 |
| 11 | $C_2H_5$ | $CH_3$ | $CH_3$ | S | Cl | H | 1320, 1170, 1129, 1035, 992 |
| 12 | $C_2H_5$ | $C_2H_5$ | $C_2H_5$ | S | H | H | 1322, 1162, 1065, 1028, 905 |
| 13 | $C_2H_5$ | $CH_3$ | $CH_3$ | O | Br | H | 1320, 1272, 1128, 1036, 1002, 918 |
| 14 | $C_2H_5$ | $CH_3$ | H | S | H | H | 1320, 1164, 1130, 1105, 1065, 1033, 920 |
| 15 | $C_2H_5$ | $-(CH_2)_4-$ | | S | H | H | 1322, 1120, 1063, 1035, 908 |
| 16 | $C_2H_5$ | $CH_3$ | $CH_3$ | S | Br | H | 1320, 1170, 1128, 1033, 995, 910 |
| 17 | $C_2H_5$ | $CH_3$ | $CH_3$ | O | Cl | H | 1325, 1275, 1255, 1125, 1040, 1005, 920 |
| 18 | $C_2H_5$ | $CH(CH_3)_2$ | H | S | Br | H | 1320, 1170, 1130, 1032, 912 |

Tabelle 1 (Fortsetzung)

| Beispiel Nr. | $R^1$ | $R^2$ | $R^3$ | X | A | B | Schmelzpunkt oder IR-Absorption ($cm^{-1}$) |
|---|---|---|---|---|---|---|---|
| 19 | $C_2H_5$ | $-(CH_2)_4-$ | | S | H | Cl | 1322, 1127, 1080, 1033 |
| 20 | $C_2H_5$ | $CH(CH_3)_2$ | H | S | Cl | H | 1320, 1170, 1130, 1030 |
| 21 | $C_2H_5$ | $C_2H_5$ | $C_2H_5$ | S | Br | H | 1499, 1270-1220, 1190, 1167, 1044, 918 |
| 22 | $C_2H_5$ | $CH_3$ | H | S | Br | H | 1322, 1130, 1079, 1034, 913 |
| 23 | $C_2H_5$ | H | H | S | Br | H | 1325, 1171, 1133, 1035, 915 |
| 24 | $C_2H_5$ | H | H | S | Cl | H | 1325, 1172, 1131, 1081, 1035, 920 |
| 25 | $C_2H_5$ | $CH_3$ | H | S | Cl | H | 1320, 1130, 1080, 1035 |
| 26 | $C_2H_5$ | $CH_3CH_2CH(CH_3)-$ | H | S | Cl | H | 1322, 1132, 1047, 1036 |
| 27 | $C_2H_5$ | $C_2H_5$ | H | S | Cl | H | 1325, 1130, 1080, 1035 |
| 28 | $CH_3$ | $CH_3$ | H | S | H | H | 1326, 1170, 1124, 1103, 1068, 1044, 918 |
| 29 | $CH_3$ | $CH_3$ | H | S | Cl | H | 1324, 1128, 1079, 1040, 911 |
| 30 | $CH_3$ | $CH_3$ | H | S | Br | H | 1324, 1132, 1125, 1036, 910 |
| 31 | $CH_3$ | $CH(CH_3)_2$ | H | S | H | H | 1324, 1164, 1123, 1067, 1039 |
| 32 | $CH_3$ | $CH(CH_3)_2$ | H | O | H | H | 1329, 1235, 1226, 1175, 1070, 1032, 937 |
| 33 | $C_2H_5$ | $CH_3$ | H | O | H | H | 1322, 1230, 1160, 1100, 1064, 1047 |
| 34 | $C_2H_5$ | $CH_3$ | H | O | Cl | H | 1321, 1265, 1240, 1220, 1067, 1035 |
| 35 | $C_2H_5$ | $C_2H_5$ | H | O | H | H | 1324, 1241, 1165, 1124, 1067 |
| 36 | $C_2H_5$ | $C_2H_5$ | H | O | Cl | H | 1322, 1268, 1127, 1078, 1035, 920 |
| 37 | $C_2H_5$ | $CH_3$ | H | O | Br | H | 1320, 1265, 1240, 1120, 1075, 1032 |

Die Trifluormethylphenylphosphorsäureamide der Formel I sind geeignet, Schädlinge aus der Klasse der Insekten, Spinnentiere und Nematoden wirksam zu bekämpfen. Sie können im Pflanzenschutz sowie auf dem Hygiene-, Vorratsschutz- und Veterinärsektor als Schädlingsbekämpfungsmittel eingesetzt werden.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Clysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria Mellonella (Wachsmotte), Malacosoma neustria (Ringelspinner), Dendrolimus pini (Kiefernspinner), Thaumatopoea pityocampa (Pinienprozessionsspinner), Phalera bucephala (Mondfleck), Cheimatobia brumata (Kleiner Frostspanner), Hibernia defoliaria (Großer Frostspanner), Bupalus piniarus (Kiefernspanner), Hyphantria cunea (Weißer Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana (Baumwollkapselwurm), Plusia gamma (Gammaeule), Alabama argillacea(Baumwollblattwurm), Lymantria dispar (Schwammspinner), Lymantria monacha (Nonne), Pieris brassicae (Kohlweißling), Aporia crataegi (Baumweißling) ;

aus der Ordnung der Käfer (Coleoptera) beispielsweise Blitophaga undata (Schwarzer Rübenaaskäfer), Melanotus communis (Drahtwurm), Limonius californicus (Drahtwurm), Agriotes lineatus (Saatschnellkäfer), Agricotes obscurus (Humusschnellkäfer), Agrilus sinuatus (Birnbaum-Prachtkäfer), Meligethes aeneus (Rapsglanzkäfer), Atomaria linearis (Moosknopfkäfer), Epilachna varicestris (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagi (Spargelhähnchen), Lema melanopus (Getreidehähnchen), Leptinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Phylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Otiorrhynchus sulcatus (Gefurchter Lappenrüßler), Otiorrhynchus ovatus (Erdbeerwurzelrüßler), Hylobies abietis (Großer Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüßler), Ceuthorrhynchus napi (Großer Kohltriebrüßler), Sitophilus granaria (Kornkäfer), Anisandrus dispar (Ungleicher Holzborkenkäfer), Ips typographus (Buchdrucker), Blastophagus piniperda (Gefurchter Waldgärtner) ;

aus der Ordnung der Zweiflügler (Diptera) beispielsweise Lycoria pectoralis, Mayetiola destructor (Hessenfliege), Dasineura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake), Dacus cucurbitae (Melonenfliege), Dacus oleae (Olivenfliege), Ceratitis capitata (Mittelmeerfruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hyoscyami (Rübenfliege), Anopheles maculipennis, Culex pipiens, Aedes aegypti (Gelbfiebermücke), Aedes vexans, Tabanus bovinus (Rinderbremse), Tipula paludosa (Wiesenschnake), Musca domestica (Stubenfliege), Fannia canicularis (Kleine Stubenfliege), Muscina stabulans, Glossina morsitans (Tsetse-Fliege), Oestrus ocis, Chrysomya macellaria, Chrysomya hominivorax, Lucilia cuprina, Lucilia sericata, Hypoderma lineata ;

aus der Ordnung der Hautflügler (Hymenoptera) beispielsweise Athalia rosae (Rübenblattwespe), Hoplocampa minuta (Pflaumensägewespe), Monomorium pharaonis (Pharaoameise), Solenopsis geminata (Feuerameise), atta sexdens (Blattschneiderameise) ;

aus der Ordnung der Wanzen (Heteroptera) beispielsweise Nezara viridula (Grüne Reiswanze), Eurygaster integriceps (Asiatische Getreidewanze), Blissus leucopterus (Chinch bug), Dysdercus cingulatus (Kapok-Wanze), Dysdercus intermedius (Baumwollwanze), Piesma quadrata (Rübenwanze), Lygus pratensis (Gemeine Wiesenwanze) ;

aus der Ordnung der Pflanzensauger (Homoptera) beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weiße Fliege), Aphis fabae (Schwarze Bohnenlaus), Aphis pomi (Grüne Apfellaus), Aphis sambuci (Holunderblattlaus), Aphidula nastrutii (Kreuzdornblattlaus), Cerosipha gossypii (Gurkenblattlaus), Sappaphis mali (Rosige Apfellaus), Sappaphis mala (Mehlige Birnblattlaus), Dysphis radicola (Mehlige Apfelfalterlaus), Brachycaudus cardui (Große Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkirschenlaus), Dysaulacorthum pseudosolani (Gefleckte Kartoffellaus), Acyrthosiphon

onobrychis (Grüne Erbsenlaus), Macrosiphon rasae (Große Rosenblattlaus), Megoura viciae (Wickenlaus), Schizoneura lanuginosa (Birnenblattlaus), Pemphigus bursarius (Salatwurzellaus), Dreyfusia nordmannianae (Tannentrieblaus), Dreyfusia piceae (Weißtannenstammlaus), Adelges laricis (Rote Fichtengallenlaus), Viteus vitifolii (Reblaus) ;

aus der Ordnung der Termiten (Isoptera) beispielsweise Reticulitermes lucifugus, Calotermes flavicollis, Leucotermes flavipes, Termes natalensis ;

aus der Ordnung der Geradflügler (Orthoptera) beispielsweise Forficula auricularia (Gemeiner Ohrwurm), Acheta domestica (Heimchen), Gryllotalpa gryllotalpa (Maulwurfsgrille), Tachycines asynamorus (Gewächshausschrecke), Locusta migratoria (Wanderheuschrecke), Stauronotus maroccanus (Marokkanische Wanderheuschrecke), Schistocerca peregrina (Wanderheuschrecke), Nomadacris septemfasciata (Wanderheuschrecke), Melanoplus spretus (Felsengebirgsheuschrecke), Melano plus femur-rubrum (Rotbeinige Heuschrecke), Blatta orientalis (Küchenschabe), Blattella germanica (Deutsche Schabe), Periplaneta americana (Amerikanische Schabe), Blabera gigantea (Riesenschabe).

Zur Klasse der Arachnoidea gehören Spinnentiere (Acarina) beispielsweise Ixodes ricinus (Holzbock), Ornithodorus moubata, Amblyomma americanum, Dermacentor silvarum, Boophilus microplus, Tetranychus telarius, Tetranychus atlanticus, Tetranychus pacificus, Paratetranychus pilosus, Bryobia praetiosa.

Zur Klasse der Nemathelminthes zählen beispielsweise Wurzelgallennematoden, z. B. Meloidogyne incognita, Meloidogyne hapla, Meloidogyne javanica, Zysten bildende Nematoden, z. B. Heterodera rostochiensis, Heterodera schachtii, Heterodera avenae, Heterodera glycines, Heterodera triflolii, Stock- und Blattälchen, z. B. Ditylenchus dipsaci, Ditylenchus destructor, Pratylenchus neglectus, Pratylenchus penetrans, Partylenchus goodeyi, Paratylenchus curvitatus sowie Tylenchorhynchus dubius, Tylenchorhynchus claytoni, Rotylenchus robustus, Heliocotylenchus multicinctus, Radopholus similis, Belonolaimus longicaudatus, Longidorus elongatus, Trichodorus primitivus.

Die Wirkstoffe können als solche, in Form ihrer Formulierungen oder den daraus bereiteten Anwendungsmöglichkeiten, z. B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken ; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenon, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Beispiele für Formulierungen sind :

I. 5 Gewichtsteile der Verbindung Nr. 1 werden mit 95 Gewichtsteilen feinteiligem Kaolin innig vermischt. Man erhält auf diese Weise ein Stäubemittel, das 3 Gew.% des Wirkstoffs enthält.

II. 30 Gewichtsteile der Verbindung Nr. 2 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 10 Gewichtsteile der Verbindung Nr. 4 werden in einer Mischung gelöst, die aus 90 Gewichtsteilen Xylol, 6 Gewichtsteilen des Anlagerungsproduktes von 8 bis 10 mol Äthylenoxid an 1 mol Ölsäure-N-monoethanolamid, 2 Gewichtsteilen Calciumsalz der Dodecylbenzolsulfonsäure und 2 Gewichtsteilen des Anlagerungsproduktes von 40 mol Ethylenoxid an 1 mol Ricinusöl besteht.

IV. 20 Gewichtsteile der Verbindung Nr. 13 werden in einer Mischung gelöst, die aus 60 Gewichtsteilen Cyclohexanon, 30 Gewichtsteilen Isobutanol, 5 Gewichtsteilen des Anlagerungsproduktes von 7 mol Ethylenoxid an 1 mol Isooctylphenol und 5 Gewichtsteilen des Anlagerungsproduktes von 40 mol Ethylenoxid an 1 mol Ricinusöl besteht.

V. 80 Gewichtsteile der Verbindung Nr. 19 werden mit 3 Gewichtsteilen des Natriumsalzes der Diisobutylnaphthalin-alpha-sulfonsäure, 10 Gewichtsteilen des Natriumsalzes einer Ligninsulfonsäure aus einer Sulfit-Ablauge und 7 Gewichtsteilen pulverförmigem Kieselsäuregel gut vermischt und in einer Hammermühle vermahlen.

Granulate, z. B. Umhüllungs-, Imprägnierungs- und Homogengranulate, können durch Bindung der Wirkstoffe an feste Trägerstoffe hergestellt werden. Feste Trägerstoffe sind z. B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Dungemittel, wie z. B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.% Wirkstoff, vorzugsweise zwischen 0,5 und 90 Gew.%.

Die Wirkstoffkonzentrationen in den anwendungsfertigen Zubereitungen können in größeren Bereichen variiert werden.

Im allgemeinen liegen sie zwischen 0,000 1 und 10 %, vorzugsweise zwischen 0,01 und 1 %.

Die Wirkstoffe können auch mit gutem Erfolg im Ultra-Low-Volume-Verfahren (ULV) verwendet werden, wobei es möglich ist, Formulierungen mit mehr als 95 Gew.% Wirkstoff oder sogar den Wirkstoff ohne Zusätze auszubringen.

Die Aufwandmenge an Wirkstoff beträgt unter Freilandbedingungen 0,2 bis 10, vorzugsweise 0,5 bis 2,0 kg/ha.

Zu den Wirkstoffen können Öle verschiedenen Typs, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1 : 10 bis 10 : 1 zugemischt werden.

Beispielsweise können folgende Mittel zugemischt werden : 1,2-Dibrom-3-chlorpropan, 1,3-Dichlorpropen, 1,3-Dichlorpropen + 1,2-Dichlorpropan, 1,2-Dibrom-ethan, 2-sec.-Butylphenyl-N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercapto-phenyl-N-methylcarbamat, 4-Dimethylamino-3,5-xylyl-N-methylcarbamat, 2-(1,3-Dioxolan-2-yl)-phenyl-N-methylcarbamat, 1-Naphthyl-N-methylcarbamat, 2,3-Dihydro-2,2-dimethylbenzofuran-7-yl-N-methylcarbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim,S-Methyl-N-[(methylcarbamoyl)-oxy]-thio-acetimidat, Methyl-N',N'-dimethyl-N-[(methylcarbamoyl)oxy]-1-thiooxamidat, N-(2-Methyl-chlor-phenyl)-N',N'-dimethylformamidin, Tetrachlorthiophen, 1-(2,6-Difluor-benzoyl)-3-(4-chlor-phenyl)-harnstoff, O,O-Dimethyl-O-(p-nitrophenyl)-phosphorthioat, O,O-Diethyl-O-(p-nitrophenyl)-phosphorthioat, O-Ethyl-O-(p-nitrophenyl)-phenyl-phosphonothioat, O,O-Dimethyl-O-(3-methyl-4-nitrophenyl)-phosphorthioat, O,O-Diethyl-O-(2,4-dichlorphenyl)-phosphorthioat, O-Ethyl-O-(2,4-dichlorphenyl)-phenyl-phosphonothioat, O,O-Dimethyl-O-(2,4,5-trichlorphenyl)-phosphorthioat, O-Ethyl-O-(2,4,5-trichlorphenyl)-ethyl-phosphonothioat, O,O-Dimethyl-O-(4-brom-2,5-dichlorphenyl)-phosphorthioat, O,O-Dimethyl-O-(2,5-dichlor-4-jodphenyl)-phosphorthioat, O,O-Dimethyl-O-(3-methyl-4-methylthiophenyl)-phosphorthioat, O-Ethyl-O-(3-methyl-4-methylthiophenyl)-isopropylphosphoramidat, O,O-Diethyl-O-[p-methylsulfinyl-phenyl]-phosphorthioat, O-Ethyl-S-phenyl-ethyl-phosphonodithioat, O,O-Diethyl-[2-chlor-1-(2,4-dichlorphenyl)-vinyl]-phosphat, O,O-Dimethyl-[2-chlor-1-(2,4,5-trichlorphenyl)]-vinylphosphat, O,O-Dimethyl-S-(1'-phenyl)-ethylacetat-phosphordithioat, Bis-(dimethylamino)-fluorphosphinoxid, Octamethyl-pyrophosphoramid, O,O,O,O-Tetraethyldithio-pyrophosphat, S-Chlormethyl-O,O-diethyl-phosphordithioat, O-Ethyl-S,S-dipropyl-phosphordithioat, O,O-Dimethyl-O-2,2-dichlorvinyl-phosphat, O,O-Dimethyl-1,2-dibrom-2,2-dichlorethylphosphat, O,O-Dimethyl-2,2,2-trichlor-1-hydroxyethylphosphonat, O,O-Dimethyl-S-[1,2-biscarbethoxy-ethyl-(1)]-phosphordithioat, O,O-Dimethyl-O-(1-methyl-2-carbmethoxy-vinyl)-phosphat, O,O-Dimethyl-S-(N-methyl-carbamoyl-methyl)-phosphordithioat, O,O-Dimethyl-S-(N-methyl-carbamoyl-methyl)-phosphorthioat, O,O-Dimethyl-S-(N-methoxyethyl-carbamoyl-methyl)-phosphordithioat, O,O-Dimethyl-S-(N-formyl-N-methyl-carbamoylmethyl-phosphordithioat, O,O-Dimethyl-O-[1-methyl-2-(methylcarbamoyl)-vinyl]-phosphat, O,O-Dimethyl-O-[(1-methyl-2-dimethylcarbamoyl)-vinyl]-phosphat, O,O-Dimethyl-O-[(1-methyl-2-chlor-2-diethylcarbamoyl)-vinyl]-phosphat, O,O-Diethyl-S-(ethylthio-methyl)-phosphordithioat, O,O-Diethyl-S-[(p-chlorphenylthio)-methyl]-phosphordithioat, O,O-Dimethyl-S-(2-ethylthioethyl)-phosphorthioat, O,O-Dimethyl-S-(2-ethylthioethyl)-phosphordithioat, O,O-Dimethyl-S-(2-ethylsulfinyl-ethyl)-phosphorthioat, O,O-Diethyl-S-(2-ethylthioethyl)-phosphordithioat, O,O-Diethyl-S-(2-ethylsulfinylethyl)-phosphorthioat, O,O-Diethyl-thiophosphoryliminophenyl-acetonitril, O,O-Diethyl-S-(2-chlor-1-phthalimidoethyl)-phosphordithioat, O,O-Diethyl-S-[6-chlor-benzoxazolon-(2)-yl(3)]-methyldithiophos-

phat, O,O-Dimethyl-S-[2-methoxy-1,3,4-thiadiazol-5-[4H]-onyl-(4)-methyl]-phosphordithioat, O,O-Diethyl-O-[3,5,6-trichlor-pyridyl-(2)]-phosphorthioat, O,O-Diethyl-O-(2-pyrazinyl)-phosphorthioat, O,O-Diethyl-O-[2-isopropyl-4-methyl-pyrimidinyl(6)]-phosphorthioat, O,O-Diethyl-O-[2-(diethylamino)-6-methyl-4-pyrimidinyl]-thionophosphat, O,O-Dimethyl-S-(4-oxo-1,2,3-benzotriazin-3-[4H]-yl-methyl)-phosphordithioat, O,O-Dimethyl-S-[(4,6-diamino-1,3,5-triazin-2-yl)-methyl]-phosphordithioat, O,O-Diethyl-(1-phenyl-1,2,4-triazol-3-yl)-thionophosphat, O,S-Dimethyl-phosphor-amido-thioat, O,S-Dimethyl-N-acetyl-phosphoramidothioat, Hexachlorcyclohexan, 1,1-Di-(p-methoxyphenyl)-2,2,2-trichlor-ethan, 6,7,8,9,10,10-Hexachloro-1,5,5a,6,9,9a-hexahydro-6,9-methano-2,4,3-benzodioxa-thiepin-3-oxid, Pyrethrine, DL-2-Allyl-3-methyl-cyclopenten-(2)-on-(1)-yl-(4)-DL-cis,trans-chrysanthemat, 5-Benzyl-furyl-(3)-methyl-DL-cis,trans-chrysanthemat, 3-Phenoxybenzyl (±)-cis,trans-2,2-dimethyl-3-(2,2-dichlorvinyl)-cyclopropancarboxylat,-Cyano-3-phenoxybenzyl (±)-cis,trans-2,2-dimethyl-3-(2,2-dichlorvinyl)-cyclopropancarboxylat, (s)- -Cyano-3-phenoxybenzyl-cis(1R,3R)-2,2-dimethyl-3-(2,2-dibromvinyl)-cyclopropancarboxylat, 3,4,5,6-Tetrahydrophthalimido-ethyl-DL-cis,trans-chrysanthemat, 2-Methyl-5-(2-propinyl)-3-furylmethyl-chrysanthemat, (-Cyano-3-phenoxybenzyl)-isopropyl-4-chlorphenylacetat.

Wie sich aus den nachfolgenden Beispielen ergibt, haben die erfindungsgemäßen (Thio)phosphorsäureesteramide eine deutlich bessere oder mindestens gleichwertige Wirkung als vergleichbare bekannte Mittel, wobei zum Vergleich die aus der US-PS 3 368 003 bekannte Verbindung.

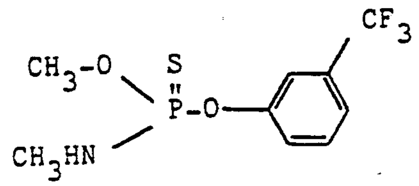

gewählt wurde.

Kontaktwirkung auf Kornkäfer (Sitophilus granaria)

Petrischalen von 10 cm Durchmesser wurden mit der acetonischen Wirkstofflösung ausgekleidet. Nach Verdunsten des Lösungsmittels belegt man die Schalen mit 100 Kornkäfern. Nach 4 Stunden wurden die Käfer in unbehandelte Gefäße überführt. Die Mortalitätsrate wurde nach 24 Stunden ermittelt. Dabei wurde festgestellt, wieviele Käfer in der Lage sind, nach diesem Zeitpunkt innerhalb von 60 Minuten ein unbehandeltes Pappschälchen (∅ 40 mm, Höhe 10 mm) zu verlassen.

Danach haben die Verbindungen Nr. 1, 3, 5, 6, 7, 8, 9, 10, 12, 14, 18, 20, 22, 23, 24, 25 und 27 bei einer Anwendungsform von — je nach Verbindung — 0,02 bis 0,4 mg je Schale praktisch vollständige Mortalität zur Folge, während 0,4 mg des Vergleichsmittels eine Mortalität von unter 80 % bewirken.

Kontaktwirkung auf Moskito-Larven (Aedes aegypti)

200 ml Leitungswasser wurden mit der Wirkstoffaufbereitung versetzt und darauf mit 30 bis 40 Moskito-Larven im 4. Larvenstadium besetzt.

Die Versuchstemperatur betrug 20 °C. Nach 24 Stunden wurde die Wirkung ermittelt. Danach haben die Wirkstoffe Nr. 3, 4, 5, 14, 18, 20, 21, 22, 25, 26 und 27 bei einer Konzentration zwischen 0,04 und 0,2 ppm eine absolut tödlich Wirkung, während das Vergleichsmittel bei einer Konzentration von 1 ppm weniger als 80 % Mortalität erreicht.

Kontaktwirkung auf Baumwollwanze (Dysdercus intermedius)

Petrischalen von 10 cm Durchmesser wurden mit 1 ml der acetonischen Wirkstofflösung ausgekleidet.

Nach Verdunsten des Lösungsmittels besetzt man die Schalen mit je 20 Larven des vorletzten Stadiums und registriert die Wirkung nach 24 Stunden.

Hierbei haben die Wirkstoffe Nr. 1, 3, 5, 6, 7, 9, 10, 14, 22, 24 und 27 bei einer Anwendungsmenge von 0,004 bis 0,02 mg vollständige Tötung zur Folge, während 0,04 mg des Vergleichsmittels weniger als 80 % Mortalität aufweisen.

Fraß- und Kontaktwirkung, Kohlschaben-Raupen (Plutella maculipennis)

Blätter von jungen Kohlpflanzen wurden 3 Sekunden in die wäßrige Wirkstoffemulsion getaucht und nach kurzem Abtropfen auf einen angefeuchteten Filter in eine Petrischale gelegt. Das Blatt wurde darauf mit 10 Raupen des 4. Stadiums belegt.

Nach 48 Stunden beurteilt man die Wirkung.

Hierbei erreichen die Wirkstoffe Nr. 1 und 6 bei einer Konzentration von 0,01 % oder weniger vollständigen Bekämpfungserfolg, während die Wirkstoffe 8 und 24 noch 80 % Erfolg erreichen.

Das Vergleichsmittel leistet bei 0,02 % eine Mortalitätsrate von weniger als 80 %.

Zuchtversuch mit Stubenfliegen-Larven (Musca domestica)

Je 4,5 ml Magermilch füllte man in 50 ml Pennicillingläser und versetzt sie darauf mit 0,5 ml der wäßrigen Wirkstoffaufbereitung. Nach kurzem Mischen fügt man ein Wattebällchen (Firma Hartmann, Maintal) dazu und belegt dieses mit ca. 50 Ei-Larven der Stubenfliege.

Die Gläser lagerte man abgedeckt bei Raumtemperatur und beurteilt die Entwicklung nach 7 Tragen.

Totale Hemmung wird bei einer Konzentration von 0,2 bis 5,0 ppm je nach Wirkstoff bei den Proben Nr. 1, 3, 4, 6, 8, 9, 10, 11, 12, 14, 18, 21, 22, 23, 24, 25 und 27 erzielt. Das Vergleichsmittel erzielt bei 10,0 ppm nur eine geringe Hemmung.

Wirkung auf Spinnmilben (Tetranchus telarius) (Test A)

Getopfte Buschbohnen, die das erste Folgeblattpaar entwickelt haben und einen starken Besatz aller Stadien der Spinnmilbe Tetranychus telarius tragen, wurden in der Spritzkabine mit der wäßrigen Wirkstoffaufbereitung tropfnaß gespritzt. Die Pflanzen kommen dazu auf einen Drehteller und wurden von allen Seiten mit 50 ml Spritzbrühe besprüht. Der Sprühvorgang dauerte ca. 22 Sekunden.

Nach 8 Tagen wurden die Pflanzen auf lebende Spinnmilben untersucht.

Eine Mortalität zwischen 30 und 100 % wurde mit einer Konzentration zwischen 0,02 und 0,04 erreicht bei den Verbindungen Nr. 1, 3, 6, 7, 9, 10, 23 und 25, während das Vergleichsmittel bei 0,1 % weniger als 80 % Mortalität erreicht.

Wirkung auf Wurzelgallennematoden (Meloidogyne incognita)

Je 300 g Komposterde wurden mit 30 ml der wäßrigen Wirkstoffaufbereitung innig vermischt und in Plastiktöpfe gefüllt. Darauf bepflanzt man die Töpfe mit Tomatensetzlingen und hält diese unter Gewächshausbedingungen bei 22 bis 24 °C.

Nach 6 bis 8 Wochen untersucht man die Wurzeln auf Gallenbildung.

Dabei erreichen die Wirkstoffe Nr. 1, 2, 3, 6, 7, 12 und 18 bei 0,005 bis 0,1 %igen Wirkstoffaufbereitungen eine 80- bis 100 %ige Reduktion des Gallenbildung.

**Patentansprüche**

1. 4-Trifluormethylphenyl(thio)phosphorsäureamid der Formel

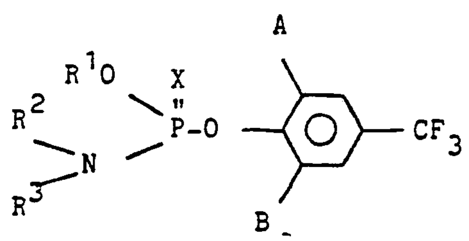

(I)

in der

$R^1$ eine unverzweigte oder verzweigte Alkylgruppe mit bis zu 4 Kohlenstoffatomen,

$R^2$, $R^3$ gleich oder verschieden sind und jeweils ein Wasserstoffatom oder eine unverzweigte oder verzweigte Alkylgruppe mit bis zu 4 Kohlenstoffatomen, eine olefinisch ungesättigte Alkylengruppe mit 2 bis 4 Kohlenstoffatomen oder gemeinsam einen zweiwertigen Alkylenrest mit 4 oder 5 Kohlenstoffatomen,

A, B gleich oder verschieden sind und ein Wasserstoff-, Chlor- oder Bromatom sowie

X ein Sauerstoff- oder Schwefelatom bedeuten.

2. Verfahren zur Herstellung von 4-Trifluormethylphenyl(thio)phosphorsäureamiden gemäß Anspruch 1, dadurch gekennzeichnet, daß man ein entsprechendes Phenol (II)

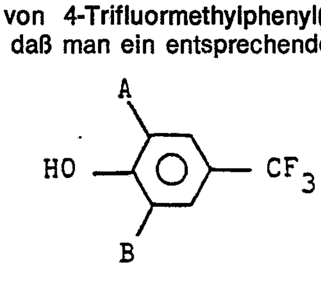

(II)

vorzugsweise in Gegenwart eines Säureacceptors bzw. eines Alkalimetall-, Erdalkalimetall- oder Ammoniumsalzes des Phenols mit einem entsprechenden (Thio)Phosphorsäureesteramid-halogenid (III)

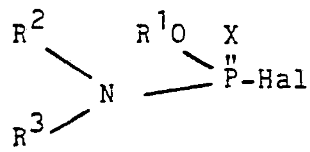
(III)

bei einer Temperatur unterhalb 120 °C umsetzt.

3. Schädlingsbekämpfungsmittel, enthaltend ein 4-Trifluormethylphenyl(thio)phosphorsäureamid gemäß Anspruch 1.

4. Schädlingsbekämpfungsmittel, enthaltend einen festen oder flüssigen Trägerstoff und mindestens ein 4-Trifluormethylphenyl(thio)phosphorsäureamid gemäß Anspruch 1.

5. Verwendung von 4-Trifluormethylphenyl(thio)phosphorsäureamiden gemäß Anspruch 1 zur Bekämpfung von Schädlingen.

6. Verfahren zur Bekämpfung von Schädlingen, dadurch gekennzeichnet, daß man eine wirksame Menge des 4-Trifluormethylphenyl(thio)phosphorsäureamids gemäß Anspruch 1 auf Schädlinge bzw. deren Lebensraum einwirken läßt.

**Claims**

1. A 4-trifluoromethylphenyl(thio)phosphoric acid amide of the formula

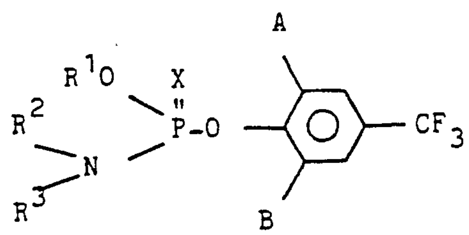
(I)

where

$R^1$ is linear or branched alkyl of up to 4 carbon atoms,

$R^2$ and $R^3$ are identical or different and each denotes hydrogen, linear or branched alkyl of up to 4 carbon atoms, or olefinically unsaturated alkylene of 2 to 4 carbon atoms, or together denote a divalent alkylene of 4 or 5 carbon atoms,

A and B are identical or different and each denotes hydrogen, chlorine or bromine, and

X is oxygen or sulphur.

2. A process for the preparation of a 4-trifluoromethylphenyl(thio)phosphoric acid amide as claimed in claim 1, wherein an appropriate phenol (II)

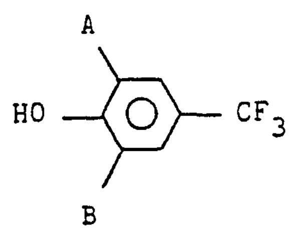
(II)

is reacted with an appropriate(thio)phosphoric acid ester amide-halide (III)

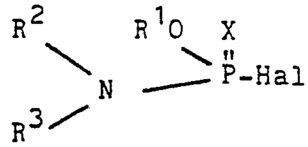
(III)

at a temperature of less than 120 °C, preferably in the presence of an acid acceptor or an alkali metal, alkaline earth• metal or ammonium salt of phenol.

3. A pesticide containing a 4-trifluoromethylphenyl(thio)-phosphoric acid amide as claimed in claim 1.

4. A pesticide containing a solid or liquid carrier and at least one 4-trifluoromethylphenyl(thio)phosphoric acid amide as claimed in claim 1.

5. The use of a 4-trifluoromethylphenyl(thio)phosphoric acid amide as claimed in claim 1 for combating pests.

6. A process for combating pests, wherein an effective amount of a 4-trifluoromethylphenyl(thio) phosphoric acid amide as claimed in claim 1 is allowed to act on the pests or their habitat.

**Revendications**

1. Amide d'acide trifluorométhyl-4 phényl(thio)phosphorique de la formule

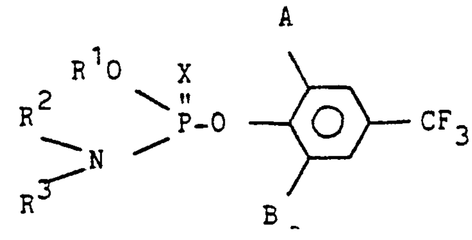

(I)

dans laquelle

$R^1$ désigne un radical alkyle en $C_1$ à $C_4$ à chaîne droite ou ramifiée,

$R^2$ et $R^3$, qui peuvent être identiques ou différents, désignent chacun un atome d'hydrogène ou un radical alkyle en $C_1$ à $C_4$ à chaîne droite ou ramifiée ou un groupe alkylène en $C_2$ à $C_4$ ou forment ensemble un groupe alkylène bivalent en $C_4$ ou $C_5$,

A et B, qui peuvent être identiques ou différents, désignent chacun un atome d'hydrogène, de chlore ou de brome et

X désigne un atome d'oxygène ou de soufre.

2. Procédé de préparation d'amides d'acide trifluorométhyl-4-phényl(thio)phosphorique selon la revendication 1, caractérisé en ce que l'on fait réagir un phénol approprié de la formule II

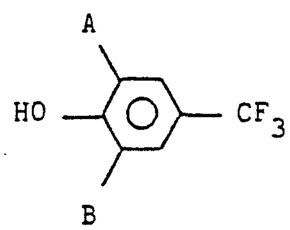

(II)

de préférence en présence d'un fixateur d'acide ou d'un sel de métal alcalin ou de métal alcalino-terreux ou d'ammonium du phénol, à une température inférieure à 120 °C, avec un halogénure d'amide d'acide (thio)phosphorique de la formule III

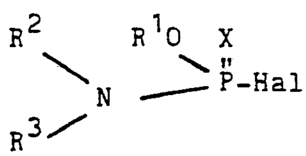

(III)

approprié.

3. Composition pesticide, contenant un amide d'acide trifluorométhyl-4-phényl(thio)phosphorique selon la revendication 1.

4. Composition pesticide, contenant au moins un amide d'acide trifluorométhyl-4 phényl (thio)-phosphorique selon la revendication 1 et une matière support solide ou un véhicule liquide.

5. Utilisation d'amides d'acide trifluorométhyl-4 phényl (thio)phosphorique selon la revendication 1 dans la lutte contre des parasites.

6. Procédé de lutte contre des parasites, caractérisé en ce que l'on laisse agir une quantité efficace du point de vue pesticide d'un amide d'acide trifluorométhyl-4 phényl (thio)phosphorique selon la revendication 1 sur les parasites ou sur leur biotope.